# EUROPÄISCHE PATENTSCHRIFT

(11) **EP 3 137 354 B1**
(45) Veröffentlichungstag und Bekanntmachung des Hinweises auf die Patenterteilung: **06.03.2019**
(21) Anmeldenummer: 14808617.6
(22) Anmeldetag: 05.12.2014
(51) Int. Cl.: B60T 13/74

(54) **BETÄTIGUNGSVORRICHTUNG FÜR EINE ELEKTROMECHANISCH BETÄTIGBARE FAHRZEUGBREMSE**
ACTUATION DEVICE FOR ELECTRO-MECHANIC VEHICLE BRAKE
SYSTÈME D'ACTUATION D'UN FREIN ÉLECTRO-MECHANIQUE POUR VÉHICULE

(30) Priorität: 29.04.2014 DE 102014006105
(43) Veröffentlichungstag der Anmeldung: 08.03.2017
(73) Patentinhaber: Lucas Automotive GmbH, 56070 Koblenz (DE)
(72) Erfinder: POERTZGEN, Gregor, 56068 Koblenz (DE); DILLA, Christian, 56170 Bendorf (DE)
(74) Vertreter: Röthinger, Rainer
(86) Internationale Anmeldenummer: PCT/EP2014/076719
(87) Internationale Veröffentlichungsnummer: WO 2015/165555

(56) Entgegenhaltungen:
- WO-A1-00/61962
- WO-A1-2011/076366
- FR-A- 1 124 985
- JP-A- 2011 179 569
- US-A1- 2014 090 933

## Beschreibung

Die Erfindung betrifft eine Betätigungsvorrichtung für eine elektromechanisch betätigbare Fahrzeugbremse. Eine derartige Betätigungsvorrichtung kann zum Betätigen einer elektrischen Park- bzw. Feststellbremse (EPB) oder einer elektromechanischen Betriebsbremse (EMB) eines Kraftfahrzeuges vorgesehen sein.

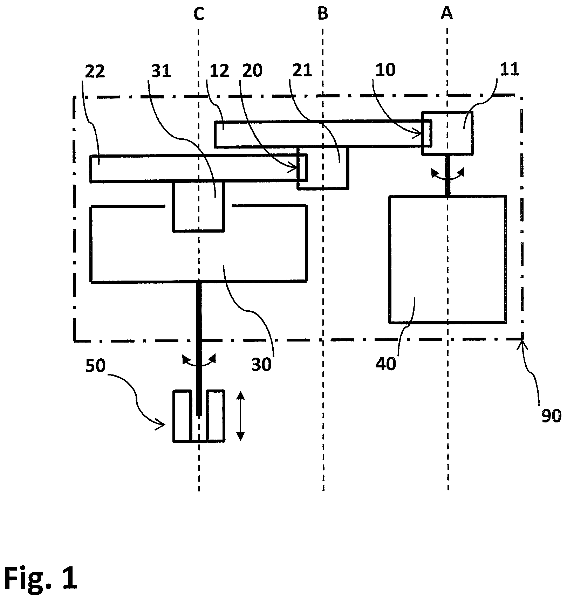

Aus der WO 2012/010256 A1 und der DE 10 2004 048 700 A1 ist unter anderem eine Betätigungsvorrichtung bekannt, die eine mehrstufige Getriebeeinheit aufweist, die zwischen einem antreibenden Elektromotor und einem getriebenen Antriebselement der Fahrzeugbremse angeordnet ist. Bei dieser bekannten Betätigungsvorrichtung sind die erste und die zweite Stufe der Getriebeeinheit jeweils als Stirnradgetriebe ausgebildet und mittels eines Doppelzahnrades gekoppelt, dessen Drehachse sich parallel zur Drehachse des Elektromotors erstreckt. Anhand von **Fig. 1** wird der Aufbau solch einer bekannten Betätigungsvorrichtung näher erläutert. Solch eine bekannte Betätigungsvorrichtung weist eine kompakte Bauweise auf, die sich aufgrund der Verwendung von Doppelzahnrädern ergibt, so dass ein verhältnismäßig geringer Einbauraumbedarf besteht. Weitere Beispiele aus dem Stand der Technik sind in Dokument US 2014/090933 offenbart.

Aufgrund der kompakten Bauweise sind allerdings die mittels solch einer bekannten Betätigungsvorrichtung für die Fahrzeugbremse erzeugbaren Brems- bzw. Spankräfte nach oben hin begrenzt. Da nur Bremskräfte bis zu einer Größenordnung von 20 Kilonewton erzeugt werden können, ist solch eine bekannte Betätigungsvorrichtung nur für den Einsatz in Fahrzeugen mit einem Gewicht bis zu einer Größenordnung von 2 Tonnen geeignet.

Von daher liegt der Erfindung die Aufgabe zugrunde, solch eine bekannte Betätigungsvorrichtung dahingehend weiterzuentwickeln, dass einerseits eine kompakte Bauweise beibehalten wird, und andererseits Anforderungen für hohe Bremskräfte erfüllt werden können.

Dazu schlägt die Erfindung eine Betätigungsvorrichtung mit den Merkmalen des Anspruchs 1 vor. Die mehrstufige Getriebeeinheit der Betätigungsvorrichtung weist zusätzlich wenigstens eine Zwischenstufe auf, die als Stirnradgetriebe ausgebildet ist, und in die wenigstens eine als Stirnradgetriebe ausgebildete Stufe der Getriebeeinheit integriert ist. Ferner weist die wenigstens eine als Stirnradgetriebe ausgebildete Zwischenstufe zwei Zwischenzahnräder auf.

Durch die wenigstens eine Zwischenstufe wird es möglich, das Übersetzungs- bzw. Untersetzungsverhältnis der vorhandenen Stufen der mehrstufigen Getriebeeinheit so zu vergrößern, dass bei nahezu gleicher Leistung des antreibenden Elektromotors von der Getriebeeinheit ausgangsseitig ein höheres Drehmoment zum Betätigen der Fahrzeugbremse erzeugt wird. Dadurch können Anforderungen für Bremskräfte oberhalb einer Größenordnung von 20 Kilonewton erfüllt werden. Denn die aufgrund des vergrößerten Übersetzungs- bzw. Untersetzungsverhältnis erhöhten Reaktionskräfte werden über die wenigstens eine Zwischenstufe aufgenommen und abgeleitet. Da (erstens) die Leistung und damit einhergehend das Bauvolumen des Elektromotors nicht erhöht wird, (zweitens) die wenigstens eine Zwischenstufe als raumsparendes Stirnradgetriebe ausgebildet ist und (drittens) die wenigstens eine Zwischenstufe in die wenigstens eine als Stirnradgetriebe ausgebildete Stufe der Getriebeeinheit integriert ist, wird eine kompakte Bauweise beibehalten. Da das Bauvolumen der erfindungsgemäßen Betätigungsvorrichtung nicht wesentlich vergrößert wird, ergibt sich der Vorteil, dass eine Anpassung der erfindungsgemäßen Betätigungsvorrichtung an Beschränkungen des vorgegebenen Einbauraumes, die sich beispielsweise aufgrund von in der Nähe der Fahrzeugbremse vorhandenen Fahrwerkskomponenten ergeben können, nicht erforderlich ist.

Da die Leistung des antreibenden Elektromotors nicht zwangsläufig erhöht werden muss, kann ein weiterer Vorteil darin bestehen, dass ebenfalls die elektrischen Komponenten zur Ansteuerung des Elektromotors beibehalten werden können, so dass kein zusätzlicher Aufwand beispielsweise für größere Leitungsquerschnitte, stärkere Endstufen und dergleichen entsteht.

Um Anforderungen für Bremskräfte in einer Größenordnung von 25 Kilonewton zu erfüllen, ist es ausreichend nur eine Zwischenstufe in eine der als Stirnradgetriebe ausgebildeten Stufen der Getriebeeinheit zu integrieren. Bereits bei Integration nur einer Zwischenstufe kann das Übersetzungs- bzw. Untersetzungsverhältnis der vorhandenen Stufen der Getriebeeinheit verdoppelt werden. Beispielsweise kann für die Getriebeeinheit eine Gesamtuntersetzung in einer Größenordnung von 150:1 auf eine Gesamtuntersetzung in einer Größenordnung von 300:1 erhöht werden. Wenn es gilt noch höhere Anforderungen zu erfüllen, kann eine Zwischenstufe in mehrere Stufen der Getriebeeinheit integriert sein.

Gemäß einer bevorzugten Ausführungsform sind die beiden Zwischenzahnräder, insbesondere hinsichtlich ihrer Anzahl der Zähne bzw. ihres Durchmessers, identisch dimensioniert. Des Weiteren erstrecken sich die Drehachsen der beiden Zwischenzahnräder jeweils parallel zur Drehachse des Elektromotors. Somit ergibt sich eine symmetrische Anordnung, bei der die von den Drehachsen der Zwischenzahnräder gebildete Ebene sich senkrecht zu der von der Drehachse des Elektromotors und der Drehachse des ersten Doppelzahnrades gebildeten Ebene erstreckt. Aufgrund der symmetrischen Anordnung ergibt sich der große Vorteil, dass Reaktionskräfte, die aufgrund der hohen Brems- bzw. Spankräfte im Betrieb der Betätigungsvorrichtung wirksam werden, über die beiden Zwischenzahnräder gleichverteilt abgeleitet werden. Für die gleichverteilte bzw. symmetrische Ableitung der Reaktionskräfte über die beiden Zwischenzahnräder spricht auch, dass die Betätigungsvorrichtung bzw. deren Antriebsmotor in zwei Drehrichtungen betrieben wird, um die für die Fahrzeugbremse erzeugten Brems- bzw. Spankräfte durch An- und Ablegen der Bremsbeläge einzustellen.

Für eine erste Variante einer erfindungsgemäßen Betätigungsvorrichtung wird vorgeschlagen, dass die erste und die zweite Stufe der Getriebeeinheit jeweils als Stirnradgetriebe ausgebildet sind, wobei die Getriebeeinheit wenigstens eine Zwischenstufe aufweist, die als Stirnradgetriebe ausgebildet und in die erste und/oder die zweite Stufe der Getriebeeinheit integriert ist. Die erste und zweite Stufe der Getriebeeinheit können mittels eines Doppelzahnrades gekoppelt sein, dessen Drehachse sich parallel zur Drehachse des Elektromotors erstreckt.

Dabei kann ferner vorgesehen sein, dass die zweite Stufe mittels eines weiteren Doppelzahnrades mit einer dritten Stufe gekoppelt ist, dessen Drehachse sich parallel zur Drehachse des Elektromotors erstreckt. Vorteilhafterweise ist die dritte Stufe als raumsparendes Planetenradgetriebe ausgebildet, dessen Bauvolumen sich koaxial zur Drehachse des weiteren Doppelzahnrades erstreckt. Im Sinne der symmetrischen Anordnung liegt die Drehachse des weiteren Doppelzahnrades in der von der Drehachse des Elektromotors und der Drehachse des ersten Doppelzahnrades gebildeten Ebene. Je nach gewünschter Vergrößerung des Übersetzungs- bzw. Untersetzungsverhältnisses der Getriebeeinheit kann das Planetenradgetriebe selbst auch mehrstufig ausgebildet sein.

Charakteristisch für die kompakte Bauweise der ersten Variante einer erfindungsgemäßen Betätigungsvorrichtung ist, dass die Schnittgerade, in der die von den Drehachsen der Zwischenzahnräder gebildete Ebene die von den Drehachsen des Elektromotors und der Doppelzahnräder gebildete Ebene schneidet, zwischen der Drehachse des Elektromotors und der Drehachse des weiteren Doppelzahnrades verläuft.

Für eine zweite Variante einer erfindungsgemäßen Betätigungsvorrichtung wird vorgeschlagen, dass die erste und die dritte Stufe der Getriebeeinheit jeweils als Stirnradgetriebe ausgebildet sind, wobei die wenigstens eine Zwischenstufe in die erste und/oder dritte Stufe der Getriebeeinheit integriert ist. Dabei kann vorgesehen sein, dass die erste Stufe mittels eines Doppelzahnrades mit einer zweiten Stufe gekoppelt ist, und die zweite Stufe als ein- oder mehrstufiges Planetenradgetriebe ausgebildet ist.

Für eine dritte Variante einer erfindungsgemäßen Betätigungsvorrichtung wird vorgeschlagen, dass die zweite und die dritte Stufe der Getriebeeinheit jeweils als Stirnradgetriebe ausgebildet sind, wobei die wenigstens eine Zwischenstufe in die zweite und/oder dritte Stufe der Getriebeeinheit integriert ist. Dabei kann vorgesehen sein, dass die zweite Stufe mittels eines Doppelzahnrades mit der dritten Stufe gekoppelt ist, und die erste Stufe als ein- oder mehrstufiges Planetenradgetriebe ausgebildet ist.

Im Sinne der symmetrischen Anordnung kann bei der zweiten und dritten Variante die Drehachse eines durchmessergrößten Zahnrades der dritten Stufe in der von der Drehachse des Elektromotors und der Drehachse des Doppelzahnrades gebildeten Ebene liegen.

Für eine kompakte Bauweise der zweiten und dritten Variante kann vorgesehen sein, dass die Schnittgerade, in der die von den Drehachsen der Zwischenzahnräder gebildete Ebene die von den Drehachsen des Elektromotors, des Doppelzahnrades und des durchmessergrößten Zahnrades der dritten Stufe gebildete Ebene schneidet, zwischen der Drehachse des Elektromotors und der Drehachse des durchmessergrößten Zahnrades der dritten Stufe verläuft.

Auch wenn sich mittels einer Getriebeeinheit mit drei hintereinander geschalteten Stufen, deren Drehachsen eine Ebene bilden, für die erfindungsgemäße Betätigungseinrichtung ein nahezu optimaler Kompromiss hinsichtlich Einbauraumbedarf, erzeugbarem Drehmoment und Wirkungsgrad erzielen lässt, ist die Erfindung nicht auf eine solche beschränkt, sondern kann (theoretisch) eine beliebige Anzahl von Getriebestufen umfassen. Dafür ist die als "erste Stufe" bezeichnete Stufe der Getriebeeinheit als diejenige Getriebestufe zu verstehen, die eingangsseitig von dem Elektromotor angetrieben wird. Und dafür ist die als "dritte Stufe" bezeichnete Stufe der Getriebeeinheit als diejenige Getriebestufe zu verstehen, von der ausgangsseitig das Antriebselement der Fahrzeugbremse getrieben wird. In diesem Zusammenhang ist die als "zweite Stufe" bezeichnete Stufe der Getriebeeinheit als diejenige Stufe der Getriebeeinheit zu verstehen, die der ersten Stufe nachgeschaltet und/oder der dritten Stufe vorgeschaltet ist.

Wie schon erwähnt ist es in der Regel ausreichend nur eine Zwischenstufe in eine der als Stirnradgetriebe ausgebildeten Stufen der Getriebeeinheit zu integrieren. Dadurch ist es möglich wenigstens eine Stufe der Getriebeeinheit, in die keine Zwischenstufe integriert ist, als Riemen- bzw. Zahnriemengetriebe oder Reibradgetriebe auszubilden. Dadurch stehen Zahnräder nicht in einem ineinander kämmenden Eingriff, so dass im Betrieb auftretende Geräusche entkoppelt werden.

Basierend auf den vorstehend diskutierten Varianten kann insbesondere eine Betätigungseinrichtung für eine elektronisch betätigbare Fahrzeugbremse so vorgesehen sein, umfassend eine mehrstufige Getriebeeinheit, die zwischen einem antreibenden Elektromotor und einem getriebenen Antriebselement der Fahrzeugbremse angeordnet ist, wobei die erste und die zweite Stufe der Getriebeeinheit jeweils als Stirnradgetriebe ausgebildet sind und mittels eines Doppelzahnrades gekoppelt sind, dessen Drehachse sich parallel zur Drehachse des Elektromotors erstreckt, wobei die Getriebeeinheit wenigstens eine Zwischenstufe aufweist, die als Stirnradgetriebe ausgebildet ist und die in die erste und/oder zweite Stufe der Getriebeeinheit integriert ist.

Die Erfindung betrifft auch eine elektromechanisch betätigbare Fahrzeugbremse, die eine erfindungsgemäße Betätigungsvorrichtung umfasst, sowie ein Antriebselement, das die von der Getriebeeinheit der erfindungsgemäßen Betätigungsvorrichtung ausgangsseitig erzeugte Drehbewegung in eine Längsbewegung zum Betätigen der Fahrzeugbremse umwandelt.

Im Folgenden werden die Bedeutung und die Ausführbarkeit der erfindungsgemäßen Betätigungsvorrichtung anhand der Zeichnungen näher erläutert. Dazu zeigt
- **Fig. 1**: schematisch in Seitenansicht eine aus dem Stand der Technik bekannte Betätigungsvorrichtung,
- **Fig. 2**: schematisch in Seitenansicht ein erstes Ausführungsbeispiel einer erfindungsgemäßen Betätigungsvorrichtung,
- **Fig. 3**: schematisch eine Draufsicht auf die Betätigungsvorrichtung gemäß **Fig. 2****,**
- **Fig. 4**: schematisch in Seitenansicht ein zweites Ausführungsbeispiel einer erfindungsgemäßen Betätigungsvorrichtung,
- **Fig. 5**: schematisch eine Draufsicht auf die Betätigungsvorrichtung gemäß **Fig. 4**,
- **Fig. 6**: schematisch in Seitenansicht ein viertes Ausführungsbeispiel einer erfindungsgemäßen Betätigungsvorrichtung,
- **Fig. 7**: schematisch eine Draufsicht auf die Betätigungsvorrichtung gemäß **Fig. 6**, und
- **Fig. 8**: schematisch in Seitenansicht ein siebtes Ausführungsbeispiel einer erfindungsgemäßen Betätigungsvorrichtung,
wobei funktionsgleiche Komponenten jeweils mit denselben Bezugszeichen bezeichnet sind.

**Fig. 1** zeigt schematisch in Seitenansicht eine aus dem Stand der Technik bekannte Betätigungsvorrichtung **90** für eine elektromechanisch betätigbare Fahrzeugbremse. Die Betätigungsvorrichtung **90** umfasst eine Getriebeeinheit mit drei Stufen **10**, **20** und **30**. Eingangsseitig wird die Getriebeeinheit von einem Elektromotor **40** angetrieben. Ausgangsseitig wird von der Getriebeeinheit ein Antriebselement **50** der (nicht näher dargestellten) Fahrzeugbremse getrieben. Bei dem Antriebselement **50** der Fahrzeugbremse handelt es sich üblicherweise um ein Mutter-/Spindel-Getriebe, das die von der Getriebeeinheit ausgangsseitig erzeugte Drehbewegung in eine Längsbewegung zum Betätigen der Bremse, also das Erzeugen und Einstellen von Brems- bzw. Spankräften zum An- und Ablegen der Bremsbeläge an eine Reibfläche wie beispielsweise eine Bremsscheibe, umwandelt.

Die Getriebeeinheit überträgt und übersetzt das von dem Elektromotor **40** erzeugte Drehmoment bzw. die von dem Elektromotor **40** erzeugte Drehzahl. Dazu sind die erste Stufe **10** und die zweite Stufe **20** jeweils als Stirnradgetriebe ausgebildet; die dritte Stufe **30** ist als (nicht näher dargestelltes) Planetenradgetriebe ausgebildet.

Das Stirnradgetriebe der ersten Stufe **10** wird von den Zahnrädern **11** und **12** gebildet, wobei das kleinere Zahnrad **11** der ersten Stufe **10** das Antriebsritzel des Elektromotors **40** ist und somit koaxial zur Dreh- bzw. Längsachse **A** des Elektromotors **40** angeordnet ist. Das durchmessergrößte (im Folgenden allgemein "größere") Zahnrad **12** der ersten Stufe **10** ist koaxial zu einer Drehachse **B** angeordnet, die sich parallel zur Drehachse **A** des Elektromotors **40** erstreckt. Bei der ersten Stufe **10** steht das durchmesserkleinste (im Folgenden allgemein "kleinere") Zahnrad **11** unmittelbar mit dem größeren Zahnrad **12** in Eingriff, wodurch das kleinere Zahnrad **11** unmittelbar mit dem größeren Zahnrad **12** zusammenwirkt.

Das Stirnradgetriebe der zweiten Stufe **20** wird von den Zahnrädern **21** und **22** gebildet, wobei das kleinere Zahnrad **21** der zweiten Stufe **20** koaxial zur Drehachse **B** angeordnet und mit dem größeren Zahnrad **12** der ersten Stufe **10** drehfest gekoppelt ist, so dass die Zahnräder **12** und **21** ein Doppelzahnrad **12/21** bilden, das sich um die Drehachse **B** dreht. Das größere Zahnrad **22** der zweiten Stufe **20** ist koaxial zu einer Drehachse **C** angeordnet, die sich parallel zur Drehachse **A des** Elektromotors **40** bzw. parallel zur Drehachse **B** des Doppelzahnrad **12/21** erstreckt. Bei der zweiten Stufe **20** steht das kleinere Zahnrad **21** unmittelbar mit dem größeren Zahnrad **22** in Eingriff, wodurch das kleinere Zahnrad **21** unmittelbar mit dem größeren Zahnrad **22** zusammenwirkt.

Das Sonnenrad **31** des Planetenradgetriebes **30** ist koaxial zur Drehachse **C** angeordnet und mit dem größeren Zahnrad **22** der zweiten Stufe **20** drehfest gekoppelt, so dass die Zahnräder **22** und **31** ein Doppelzahnrad **22/31** bilden, das sich um die Drehachse **C** dreht. Üblicherweise ist auch das Antriebselement **50** koaxial zur Drehachse **C** des Doppelzahnrades **22/31** angeordnet, wobei die Drehachse **C** mit der Längsachse der Fahrzeugbremse, die sich in der Regel koaxial zum Bremskolben erstreckt, übereinstimmt.

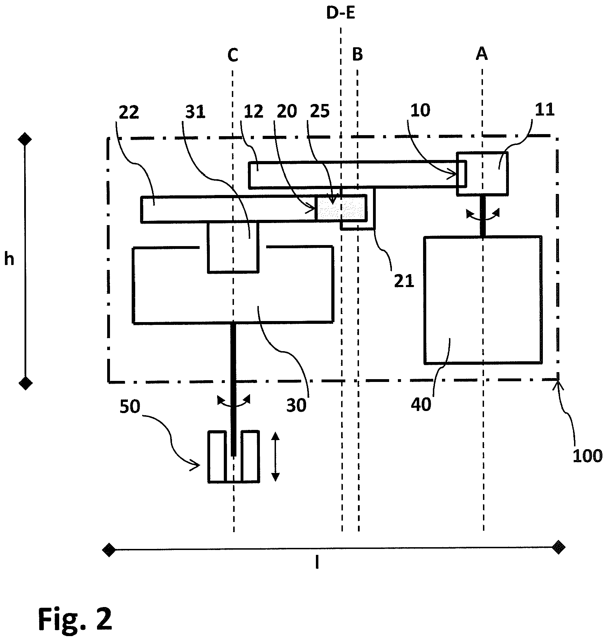

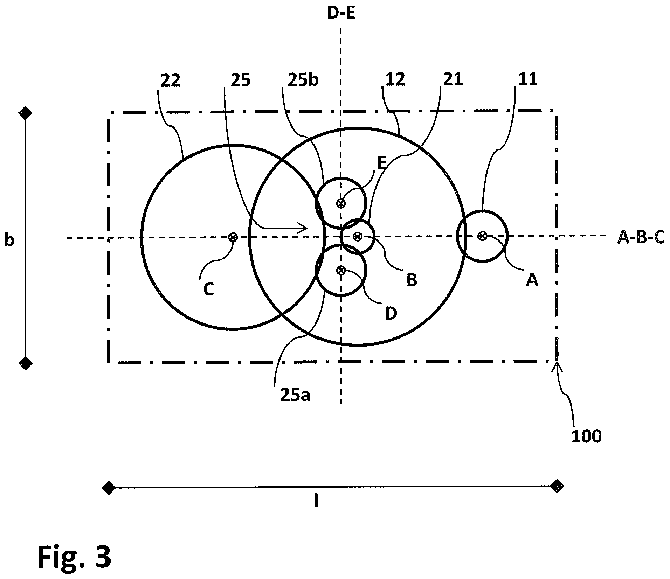

**Fig. 2** zeigt schematisch in Seitenansicht ein erstes Ausführungsbeispiel einer erfindungsgemäßen Betätigungsvorrichtung **100** für eine elektromechanisch betätigbare Fahrzeugbremse. Gegenüber der in **Fig. 1** gezeigten, bekannten Betätigungsvorrichtung **90** weist die Getriebeeinheit der Betätigungsvorrichtung **100** eine Zwischenstufe **25** auf. Die Zwischenstufe **25** ist als Stirnradgetriebe ausgebildet und in die zweite Stufe **20** der Getriebeeinheit integriert. Der Aufbau der weiteren Stufe **25** der Getriebeeinheit geht aus **Fig. 3** hervor, die schematisch eine Draufsicht auf die Betätigungsvorrichtung **100** gemäß **Fig. 2** zeigt.

Das Stirnradgetriebe der weiteren Stufe **25** wird von einem ersten Zwischenzahnrad **25a**, das koaxial zu einer Drehachse **D** angeordnet ist, und einem zweiten Zwischenzahnrad **25b**, das koaxial zu einer Drehachse **E** angeordnet ist, gebildet. Die Drehachsen **D** und **E** der Zwischenzahnräder **25a** und **25b** erstrecken sich parallel zur Drehachse **A** des Elektromotors **40** bzw. parallel zur Drehachse **B** des Doppelzahnrades **12/21** bzw. parallel zur Drehachse **C** des größeren Zahnrades **22** der zweiten Stufe **20**. Die beiden Zwischenzahnräder **25a** und **25b** wirken mit dem kleineren Zahnrad **21** der zweiten Stufe **20** und dem größeren Zahnrad **22** der zweiten Stufe **20** zusammen.

Die beiden Zwischenzahnräder **25a** und **25b** sind hinsichtlich ihrer Anzahl der Zähne bzw. ihres Durchmessers identisch dimensioniert. Somit ergibt sich eine symmetrische Anordnung, bei der die Drehachse **A** des Elektromotors **40**, die Drehachse **B** des Doppelzahnrades **12/21** und die Drehachse **C** des größeren Zahnrades **22** eine gemeinsame Ebene **A-B-C** bilden, die sich senkrecht zu der von den Drehachsen **D** und **E** der Zwischenzahnräder **25a** und **25b** gebildeten Ebene **D-E** erstreckt.

Des Weiteren sind die beiden Zwischenzahnräder **25a** und **25b** hinsichtlich ihrer Anzahl der Zähne bzw. ihres Durchmessers so dimensioniert, dass jedes Zwischenzahnrad größer als das kleinere Zahnrad **21** der zweiten Stufe **20** und kleiner als das größere Zahnrad **22** der zweiten Stufe **20** ist.

Über den Durchmesser der Zwischenzahnräder **25a** und **25b**, sowie den Abstand deren Drehachsen **D** und **E** von der von den Drehachsen **A**, **B** und **C** gebildete Ebene **A-B-C**, kann der Abstand zwischen den Drehachsen **B** und **C** variiert werden, um die Betätigungsvorrichtung **100** an einen vorgegebenen Einbauraum im Fahrzeug anzupassen.

Wie in **Fig. 2** und **Fig. 3** eingezeichnet, ergibt sich der Einbauraumbedarf bzw. das Bauvolumen der erfindungsgemäßen Betätigungsvorrichtung **100** aus deren Einbaulänge **l**, Einbauhöhe **h** und Einbaubreite **b**.

Die Einbaulänge **l** wird im Wesentlichen bestimmt durch den Abstand zwischen der Drehachse **C** des Doppelzahnrades **22/31** und der Drehachse **A** des Elektromotors **40**. Da die Schnittgerade, in der die von den Drehachsen **D** und **E** der Zwischenzahnräder **25a** und **25b** gebildete Ebene **D-E** die von den Drehachsen **A**, **B** und **C** gebildete Ebene **A-B-C** schneidet, zwischen der Drehachse **A** des Elektromotors **40** und der Drehachse **C** des Doppelzahnrades **22/31** - genau zwischen der Drehachse **B** des Doppelzahnrades **12/21** und der Drehachse **C** des Doppelzahnrades **22/31** verläuft -, sowie der Durchmesser der Zwischenzahnräder **25a** und **25b** entsprechend klein ist, benötigt die erfindungsgemäße Betätigungsvorrichtung **100** keine wesentlich größere Einbaulänge **l**.

Die Einbauhöhe **h** wird im Wesentlichen bestimmt durch die Abmessungen der ebenförmig übereinander angeordneten ersten Stufe **10** und zweiten Stufe **20** der Getriebeeinheit. Da die von den Zwischenzahnrädern **25a** und **25b** gebildete Zwischenstufe **25** in die zweite Stufe **20** integriert ist und räumlich in deren Ebene angeordnet ist, benötigt die erfindungsgemäße Betätigungsvorrichtung **100** keine wesentlich größere Einbauhöhe **h**.

Die Einbaubreite **b** wird im Wesentlichen bestimmt durch den Durchmesser des größeren Zahnrades **12** der ersten Stufe **10** bzw. den Durchmesser des größeren Zahnrades **22** der zweiten Stufe **20**. Da der Abstand zwischen den Drehachsen **D** bzw. **E** der Zwischenzahnräder **25a** bzw. **25b** und der von den Drehachsen **A**, **B** und **C** gebildete Ebene **A-B-C** und der Durchmesser der Zwischenzahnräder **25a** und **25b** entsprechend klein sind, so dass die Zwischenzahnräder **25a** bzw. **25b** innerhalb des Durchmessers des größeren Zahnrades **12** bzw. des Durchmessers des größeren Zahnrades **22** liegen, benötigt die erfindungsgemäße Betätigungsvorrichtung **100** keine wesentlich größere Einbaubreite **b**.

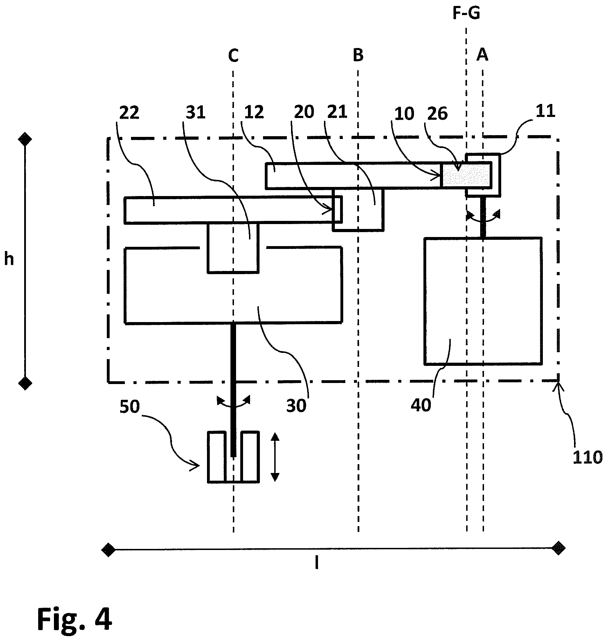

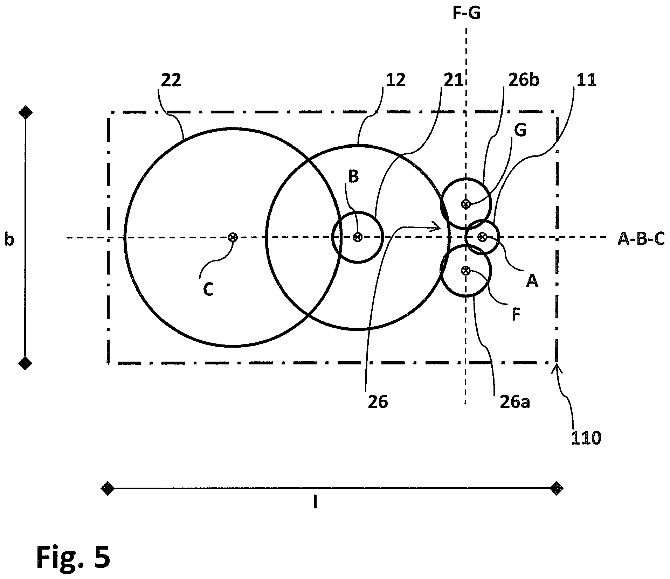

**Fig. 4** zeigt schematisch in Seitenansicht ein zweites Ausführungsbeispiel einer erfindungsgemäßen Betätigungsvorrichtung **110** für eine elektromechanisch betätigbare Fahrzeugbremse. Gegenüber der in **Fig.** 1 gezeigten, bekannten Betätigungsvorrichtung **90** weist die Getriebeeinheit der Betätigungsvorrichtung **110** eine Zwischenstufe **26** auf. Die Zwischenstufe **26** ist als Stirnradgetriebe ausgebildet und in die erste Stufe **10** der Getriebeeinheit integriert. Der Aufbau der weiteren Stufe **26** der Getriebeeinheit geht aus **Fig. 5** hervor, die schematisch eine Draufsicht auf die Betätigungsvorrichtung **110** gemäß **Fig. 2** zeigt.

Das Stirnradgetriebe der weiteren Stufe **26** wird von einem ersten Zwischenzahnrad **26a**, das koaxial zu einer Drehachse **F** angeordnet ist, und einem zweiten Zwischenzahnrad **26b**, das koaxial zu einer Drehachse **G** angeordnet ist, gebildet. Die Drehachsen **F** und **G** der Zwischenzahnräder **26a** und **26b** erstrecken sich parallel zur Drehachse **A** des Elektromotors **40** bzw. parallel zur Drehachse **B** des Doppelzahnrades **12/21** bzw. parallel zur Drehachse **C** des größeren Zahnrades **22** der zweiten Stufe **20.** Die beiden Zwischenzahnräder **26a** und **26b** wirken mit dem kleineren Zahnrad **11** der ersten Stufe **10** und dem größeren Zahnrad **12** der ersten Stufe **10** zusammen.

Die beiden Zwischenzahnräder **26a** und **26b** sind hinsichtlich ihrer Anzahl der Zähne bzw. ihres Durchmessers identisch dimensioniert. Somit ergibt sich eine symmetrische Anordnung, bei der die Drehachse **A** des Elektromotors **40**, die Drehachse **B** des Doppelzahnrades **12/21** und die Drehachse **C** des größeren Zahnrades **22** eine gemeinsame Ebene **A-B-C** bilden, die sich senkrecht zu der von den Drehachsen **F** und **G** der Zwischenzahnräder **26a** und **26b** gebildeten Ebene **F-G** erstreckt.

Des Weiteren sind die beiden Zwischenzahnräder **26a** und **26b** hinsichtlich ihrer Anzahl der Zähne bzw. ihres Durchmessers so dimensioniert, dass jedes Zwischenzahnrad größer als das kleinere Zahnrad **11** der ersten Stufe **10** und kleiner als das größere Zahnrad **12** der ersten Stufe **10** ist.

Über den Durchmesser der Zwischenzahnräder **26a** und **26b**, sowie den Abstand deren Drehachsen **F** und **G** von der von den Drehachsen **A**, **B** und **C** gebildete Ebene **A-B-C**, kann der Abstand zwischen den Drehachsen **A** und **B** variiert werden, um die Betätigungsvorrichtung **110** an einen vorgegebenen Einbauraum im Fahrzeug anzupassen.

Wie in **Fig. 4** und **Fig. 5** eingezeichnet, ergibt sich der Einbauraumbedarf bzw. das Einbauvolumen der erfindungsgemäßen Betätigungsvorrichtung **110** aus deren Einbaulänge **l**, Einbauhöhe **h** und Einbaubreite **b**.

Die Einbaulänge **l** wird im Wesentlichen bestimmt durch den Abstand zwischen der Drehachse **C** des Doppelzahnrades **22/31** und der Drehachse **A** des Elektromotors **40.** Da die Schnittgerade, in der die von den Drehachsen **F** und **G** der Zwischenzahnräder **26a** und **26b** gebildete Ebene **F-G** die von den Drehachsen **A**, **B** und **C** gebildete Ebene **A-B-C** schneidet, zwischen der der Drehachse **A** des Elektromotors **40** und der Drehachse **C** des Doppelzahnrades **22/31** - genau zwischen der Drehachse **A** des Elektromotors **40** und der Drehachse **B** des Doppelzahnrades **12/21** verläuft -, sowie der Durchmesser der Zwischenzahnräder **26a** und **26b** entsprechend klein ist, benötigt die erfindungsgemäße Betätigungsvorrichtung **110** keine wesentlich größere Einbaulänge **l.**

Die Einbauhöhe **h** wird im Wesentlichen bestimmt durch die Abmessungen der in Ebenen übereinander angeordneten ersten Stufe **10** und zweiten Stufe **20** der Getriebeeinheit. Da die von den Zwischenzahnrädern **26a** und **26b** gebildete Zwischenstufe **25** in die erste Stufe **10** integriert ist und räumlich in deren Ebene angeordnet ist, benötigt die erfindungsgemäße Betätigungsvorrichtung **110** keine wesentlich größere Einbauhöhe **h**.

Die Einbaubreite **b** wird im Wesentlichen bestimmt durch den Durchmesser des größeren Zahnrades **12** der ersten Stufe **10** bzw. den Durchmesser des größeren Zahnrades **22** der zweiten Stufe **20**. Da der Abstand zwischen den Drehachsen **F** bzw. **G** der Zwischenzahnräder **26a** bzw. **26b** und der von den Drehachsen **A**, **B und C** gebildete Ebene **A-B-C** und der Durchmesser der Zwischenzahnräder **26a** und **26b** entsprechend klein sind, so dass die Zwischenzahnräder **26a** bzw. **26b** innerhalb des Durchmessers des größeren Zahnrades **12** bzw. des Durchmessers des größeren Zahnrades **22** liegen, benötigt die erfindungsgemäße Betätigungsvorrichtung **110** keine wesentlich größere Einbaubreite **b**.

Auf die nähere Erläuterung eines dritten Ausführungsbeispiels einer erfindungsgemäßen Betätigungsvorrichtung, bei der die dritte Stufe als Planetenradgetriebe **30** ausgebildet ist, und bei der eine weitere Getriebestufe sowohl in die erste Stufe **10** als auch in die zweite Stufe **20** der Getriebeeinheit integriert ist, wird verzichtet. Denn dies ergibt sich einem Fachmann durch Kombination der erfindungsgemäßen Betätigungsvorrichtung **100** des ersten Ausführungsbeispiels gemäß **Fig. 2** und **Fig**. **3** und der erfindungsgemäßen Betätigungsvorrichtung **110** des zweiten Ausführungsbeispiels gemäß **Fig. 4** und **Fig. 5**.

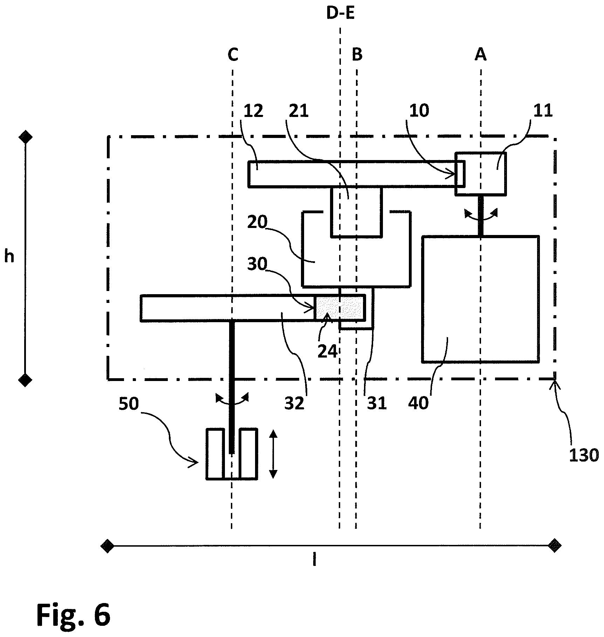

**Fig. 6** zeigt schematisch in Seitenansicht ein viertes Ausführungsbeispiel einer erfindungsgemäßen Betätigungsvorrichtung **130** für eine elektromechanisch betätigbare Fahrzeugbremse. Gegenüber den in **Fig. 2** bis **Fig. 5** gezeigten, erfindungsgemäßen Betätigungsvorrichtungen **100** und **110** sind bei der Getriebeeinheit der Betätigungsvorrichtung **130** die erste Stufe **10** und die dritte Stufe **30** jeweils als Stirnradgetriebe ausgebildet; die zweite Stufe **20** ist als (nicht näher dargestelltes) Planetenradgetriebe ausgebildet.

Dabei wird das Stirnradgetriebe der ersten Stufe **10** von den Zahnrädern **11** und **12** gebildet, wobei das kleinere Zahnrad **11** der ersten Stufe **10** das Antriebsritzel des Elektromotors **40** ist und somit koaxial zur Dreh- bzw. Längsachse **A** des Elektromotors **40** angeordnet ist. Das größere Zahnrad **12** der ersten Stufe **10** ist koaxial zur Drehachse **B** angeordnet, die sich parallel zur Drehachse **A** des Elektromotors **40** erstreckt.

Das Sonnenrad **21** des die zweite Stufe bildenden Planetenradgetriebes **20** ist koaxial zur Drehachse **B** angeordnet und mit dem größeren Zahnrad **12** der ersten Stufe **10** drehfest gekoppelt, so dass die Zahnräder **12** und **21** ein Doppelzahnrad **12/21** bilden, das sich um die Drehachse **B** dreht.

Das Stirnradgetriebe der dritten Stufe **30** wird von den Zahnrädern **31** und **32** gebildet, wobei das kleinere Zahnrad **31** der dritten Stufe **30** koaxial zur Drehachse **B** angeordnet und mit dem Ausgang des Planetenradgetriebes **20** drehfest gekoppelt ist. Das größere Zahnrad **32** der dritten Stufe **30** ist koaxial zur Drehachse **C** angeordnet, die sich parallel zur Drehachse **A** des Elektromotors **40** bzw. parallel zur Drehachse **B** des Doppelzahnrad **12/21** erstreckt. Üblicherweise ist auch das Antriebselement **50** der Fahrzeugbremse koaxial zur Drehachse **C** des größeren Zahnrades **32** der dritten Stufe **30** angeordnet.

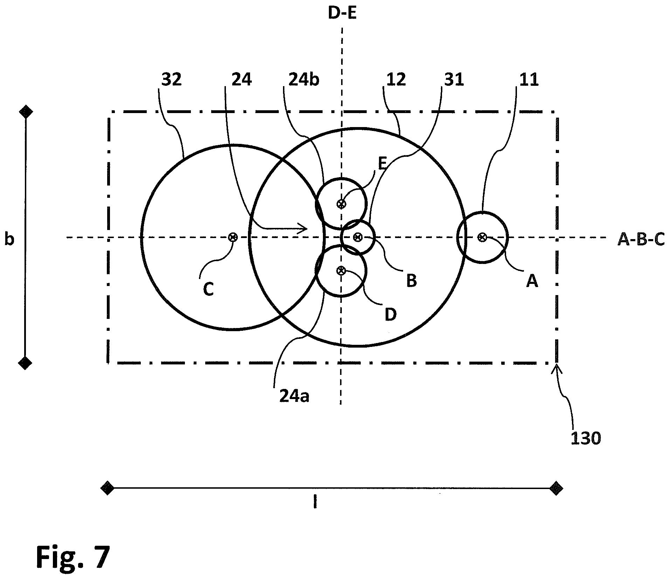

Die Getriebeeinheit der Betätigungsvorrichtung **130** weist eine Zwischenstufe **24** auf, die als Stirnradgetriebe ausgebildet ist und in die dritte Stufe **30** der Getriebeeinheit integriert ist. Der Aufbau der weiteren Stufe **24** der Getriebeeinheit geht aus Fig. **7** hervor, die schematisch eine Draufsicht auf die Betätigungsvorrichtung **130** gemäß **Fig. 6** zeigt.

Das Stirnradgetriebe der weiteren Stufe **24** wird von einem ersten Zwischenzahnrad **24a**, das koaxial zu einer Drehachse **D** angeordnet ist, und einem zweiten Zwischenzahnrad **24b**, das koaxial zu einer Drehachse **E** angeordnet ist, gebildet. Die Drehachsen **D** und **E** der Zwischenzahnräder **24a** und **24b** erstrecken sich parallel zur Drehachse **A** des Elektromotors **40** bzw. parallel zur Drehachse **B** des Doppelzahnrades **12/21** bzw. parallel zur Drehachse **C** des größeren Zahnrades **32** der dritten Stufe **30**. Die beiden Zwischenzahnräder **24a** und **24b** wirken mit dem kleineren Zahnrad **31** der dritten Stufe **30** und dem größeren Zahnrad **32** der dritten Stufe **30** zusammen.

Die beiden Zwischenzahnräder **24a** und **24b** sind hinsichtlich ihrer Anzahl der Zähne bzw. ihres Durchmessers identisch dimensioniert. Somit ergibt sich eine symmetrische Anordnung, bei der die Drehachse **A** des Elektromotors **40**, die Drehachse **B** des Doppelzahnrades **12/21** und die Drehachse **C** des größeren Zahnrades **32** eine gemeinsame Ebene **A-B-C** bilden, die sich senkrecht zu der von den Drehachsen **D** und **E** der Zwischenzahnräder **24a** und **24b** gebildeten Ebene **D-E** erstreckt.

Des Weiteren sind die beiden Zwischenzahnräder **24a** und **24b** hinsichtlich ihrer Anzahl der Zähne bzw. ihres Durchmessers so dimensioniert, dass jedes Zwischenzahnrad größer als das kleinere Zahnrad **31** der dritten Stufe **30** und kleiner als das größere Zahnrad **32** der dritten Stufe **30** ist.

Über den Durchmesser der Zwischenzahnräder **24a** und **24b**, sowie den Abstand deren Drehachsen **D** und **E** von der von den Drehachsen **A**, **B** und **C** gebildete Ebene **A-B-C**, kann der Abstand zwischen den Drehachsen **B** und **C** variiert werden, um die Betätigungsvorrichtung **130** an einen vorgegebenen Einbauraum im Fahrzeug anzupassen.

Wie in **Fig. 6** und **Fig. 7** eingezeichnet, ergibt sich der Einbauraumbedarf bzw. das Bauvolumen der erfindungsgemäßen Betätigungsvorrichtung **130** aus deren Einbaulänge **l**, Einbauhöhe **h** und Einbaubreite **b**.

Die Einbaulänge **l** wird im Wesentlichen bestimmt durch den Abstand zwischen der Drehachse **C** des größeren Zahnrades **32** und der Drehachse **A** des Elektromotors **40**. Da die Schnittgerade, in der die von den Drehachsen **D** und **E** der Zwischenzahnräder **24a** und **24b** gebildete Ebene **D-E** die von den Drehachsen **A**, **B** und **C** gebildete Ebene **A-B-C** schneidet, zwischen der Drehachse **A** des Elektromotors **40** und der Drehachse C des größeren Zahnrades **32** - genau zwischen der Drehachse **B** des Doppelzahnrades **12/21** und der Drehachse **C** des größeren Zahnrades **32** verläuft -, sowie der Durchmesser der Zwischenzahnräder **24a** und **24b** entsprechend klein ist, benötigt die erfindungsgemäße Betätigungsvorrichtung **130** keine wesentlich größere Einbaulänge **l.**

Die Einbauhöhe **h** wird im Wesentlichen bestimmt durch die Abmessungen der jeweils ebenförmig angeordneten ersten Stufe **10** und dritten Stufe **30** der Getriebeeinheit. Da die von den Zwischenzahnrädern **24a** und **24b** gebildete Zwischenstufe **24** in die dritte Stufe **30** integriert ist und räumlich in deren Ebene angeordnet ist, benötigt die erfindungsgemäße Betätigungsvorrichtung **130** keine wesentlich größere Einbauhöhe **h.**

Die Einbaubreite **b** wird im Wesentlichen bestimmt durch den Durchmesser des größeren Zahnrades **12** der ersten Stufe **10** bzw. den Durchmesser des größeren Zahnrades **32** der dritten Stufe **30**. Da der Abstand zwischen den Drehachsen **D** bzw. **E** der Zwischenzahnräder **24a** bzw. **24b** und der von den Drehachsen **A**, **B** und **C** gebildete Ebene **A-B-C** und der Durchmesser der Zwischenzahnräder **24a** und **24b** entsprechend klein sind, so dass die Zwischenzahnräder **24a** bzw. **24b** innerhalb des Durchmessers des größeren Zahnrades **12** bzw. des Durchmessers des größeren Zahnrades **32** liegen, benötigt die erfindungsgemäße Betätigungsvorrichtung **130** keine wesentlich größere Einbaubreite **b.**

Auf die nähere Erläuterung eines fünften Ausführungsbeispiels einer erfindungsgemäßen Betätigungsvorrichtung, bei der die zweite Stufe als Planetenradgetriebe **20** ausgebildet ist, und bei der eine weitere Getriebestufe nicht in die dritte Stufe **30**, sondern in die erste Stufe **10** der Getriebeeinheit integriert ist, wird verzichtet. Denn dies ergibt sich einem Fachmann unmittelbar aus der erfindungsgemäßen Betätigungsvorrichtung **110** des zweiten Ausführungsbeispiels gemäß **Fig. 4** und **Fig. 5**, bei dem die Zwischenstufe **26** als Stirnradgetriebe ausgebildet und in die erste Stufe **10** integriert ist.

Ebenso wird verzichtet auf die nähere Erläuterung eines sechsten Ausführungsbeispiels einer erfindungsgemäßen Betätigungsvorrichtung, bei der die zweite Stufe als Planetenradgetriebe **20** ausgebildet ist, und bei der eine weitere Getriebestufe sowohl in die erste Stufe **10** als auch in die dritte Stufe **30** der Getriebeeinheit integriert ist. Denn dies ergibt sich einem Fachmann durch Kombination der erfindungsgemäßen Betätigungsvorrichtung **130** des vierten Ausführungsbeispiels gemäß **Fig. 6** und **Fig. 7** und der erfindungsgemäßen Betätigungsvorrichtung **110** des zweiten Ausführungsbeispiels gemäß **Fig. 4** und **Fig. 5**.

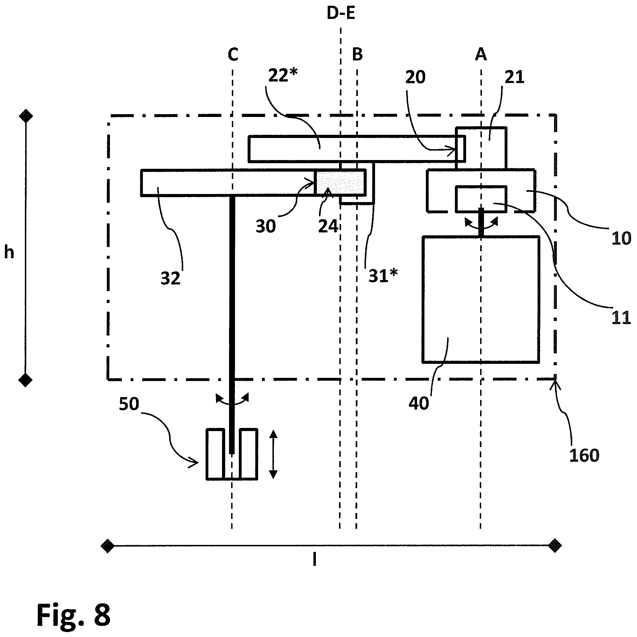

**Fig. 8** zeigt schematisch in Seitenansicht ein siebtes Ausführungsbeispiel einer erfindungsgemäßen Betätigungsvorrichtung **160** für eine elektromechanisch betätigbare Fahrzeugbremse. Gegenüber den in **Fig.** 2 bis **Fig. 7** gezeigten, erfindungsgemäßen Betätigungsvorrichtungen **100**, **110** und **130** sind bei der Getriebeeinheit der Betätigungsvorrichtung **160** die zweite Stufe **20** und die dritte Stufe **30** jeweils als Stirnradgetriebe ausgebildet; die erste Stufe **10** ist als (nicht näher dargestelltes) Planetenradgetriebe ausgebildet.

Dabei wird das Sonnenrad des die erste Stufe bildenden Planetenradgetriebes **10** von dem Antriebsritzel des Elektromotors **40** gebildet und ist somit koaxial zur Dreh- bzw. Längsachse **A** des Elektromotors **40** angeordnet.

Das Stirnradgetriebe der zweiten Stufe **20** wird von den Zahnrädern **21** und **22*** gebildet, wobei das kleinere Zahnrad **21** der zweiten Stufe **20** koaxial zur Drehachse **A** angeordnet und mit dem Ausgang des Planetenradgetriebes **10** drehfest gekoppelt ist. Das größere Zahnrad **22*** der zweiten Stufe **20** ist koaxial zur Drehachse **B** angeordnet, die sich parallel zur Drehachse **A** des Elektromotors **40** erstreckt.

Das Stirnradgetriebe der dritten Stufe **30** wird von den Zahnrädern **31*** und **32** gebildet, wobei das kleinere Zahnrad **31*** der dritten Stufe **30** koaxial zur Drehachse angeordnet und mit dem größeren Zahnrad **22*** der zweiten Stufe **20** drehfest gekoppelt ist, so dass die Zahnräder **22*** und **31*** ein Doppelzahnrad **22*/31*** bilden, das sich um die Drehachse **B** dreht. Das größere Zahnrad **32** der dritten Stufe **30** ist koaxial zur Drehachse **C** angeordnet, die sich parallel zur Drehachse **A** des Elektromotors **40** bzw. parallel zur Drehachse **B** des Doppelzahnrad **22/31** erstreckt.

Wie bei der erfindungsgemäßen Betätigungsvorrichtung **130** des vierten Ausführungsbeispiels gemäß **Fig. 6** und **Fig. 7**, weist die Getriebeeinheit der Betätigungsvorrichtung **160** eine Zwischenstufe **24** auf, die als Stirnradgetriebe ausgebildet ist und in die dritte Stufe **30** der Getriebeeinheit integriert ist.

Auf die nähere Erläuterung eines achten Ausführungsbeispiels einer erfindungsgemäßen Betätigungsvorrichtung, bei der die erste Stufe als Planetenradgetriebe **10** ausgebildet ist, und bei der eine weitere Getriebestufe nicht in die dritte Stufe **30**, sondern in die zweite Stufe **10** der Getriebeeinheit integriert ist, wird verzichtet. Denn dies ergibt sich einem Fachmann unmittelbar aus der erfindungsgemäßen Betätigungsvorrichtung **100** des ersten Ausführungsbeispiels gemäß **Fig. 2** und **Fig. 3**, bei dem die Zwischenstufe **25** als Stirnradgetriebe ausgebildet und in die zweite Stufe **20** integriert ist.

Ebenso wird verzichtet auf die nähere Erläuterung eines neunten Ausführungsbeispiels einer erfindungsgemäßen Betätigungsvorrichtung, bei der die erste Stufe als Planetenradgetriebe **10** ausgebildet ist, und bei der eine weitere Getriebestufe sowohl in die zweite Stufe **20** als auch in die dritte Stufe **30** der Getriebeeinheit integriert ist. Denn dies ergibt sich einem Fachmann durch Kombination der erfindungsgemäßen Betätigungsvorrichtung **160** des siebten Ausführungsbeispiels gemäß **Fig. 8** und der erfindungsgemäßen Betätigungsvorrichtung **100** des ersten Ausführungsbeispiels gemäß **Fig. 2** und **Fig. 3**.

Ein Fachmann weiß, dass in der Praxis die erfindungsgemäßen Betätigungsvorrichtungen **100**, **110**, **130** und **160** (nicht näher dargestellte) Träger-, Fixier-, Zentrierelemente und dergleichen umfassen, um die Zahnräder **11**, **12**, **21**, **22**, **22***, **31**, **31***, **32**, **24a**, **24b**, **25a**, **25b**, **26a** und **26b** in Bezug auf die Drehachsen **A**, **B**, **C**, **D**, **E**, **F** und **G** zu lagern und zu positionieren. Auch weiß ein Fachmann, dass in der Praxis sämtliche Komponenten der erfindungsgemäßen Betätigungsvorrichtung in einem (nicht näher dargestellten) Gehäuse untergebracht sind, so dass die Betätigungsvorrichtungen **100**, **110**, **130** und **160** eine eigenständig handhabbare Baugruppe bilden, die beim Anbau an die (nicht näher dargestellte) Fahrzeugbremse beliebig ausgerichtet sein kann. Anregungen dafür findet der Fachmann unter anderem in der WO 2012/010256 A1, deren Offenbarungsgehalt in Bezug auf eine praxisgerechte konstruktive Ausgestaltung der erfindungsgemäßen Betätigungsvorrichtung **100** bzw. **110** bzw. **130** bzw. **160** als wesentlich angesehen und hiermit aufgenommen wird.

Abschließend wird für die in **Fig. 2** bis **Fig. 5** gezeigten, erfindungsgemäßen Betätigungsvorrichtungen **100** und **110** noch ein praxisgerechtes Zahlenbeispiel für die Auslegung der Getriebeeinheit angegeben. Weist das kleinere Zahnrad **11** 15 Zähne und das größere Zahnrad **12** 75 Zähne auf, so beträgt die Untersetzung der ersten Stufe **10** 5:1. Weist das kleinere Zahnrad **21** 10 Zähne und das größere Zahnrad **22** 60 Zähne auf, so beträgt die Untersetzung der zweiten Stufe **20** 6:1. Weist das Planetenradgetriebe der dritten Stufe **30** eine Untersetzung von 13:1 auf, dann beträgt die Gesamtuntersetzung der Getriebeeinheit 390:1.

Die Zwischenzahnräder **24a**, **24b** bzw. **25a**, **25b** bzw. **26a**, **26b** der Zwischenstufe **24** bzw. **25** bzw. **26** wirken sich nicht unmittelbar auf die Gesamtuntersetzung der Getriebeeinheit aus, sondern dienen wie erwähnt dazu die erhöhten Reaktionskräfte abzuleiten, die aus der Änderung der Übersetzungs- bzw. Untersetzungsverhältnisse der vorhandenen Stufen **10**, **20** und **30** der Getriebeeinheit resultieren. Aufgrund der Zwischenzahnräder **26a** und **26b** steht bei der ersten Stufe **10** das kleinere Zahnrad **11** nicht mit dem größeren Zahnrad **12** in Eingriff;bei der zweiten Stufe **20** steht aufgrund der Zwischenzahnräder **25a** und **25b** das kleinere Zahnrad **21** nicht mit dem größeren Zahnrad **22** in Eingriff; bei der dritten Stufe **30** steht aufgrund der Zwischenzahnräder **24a** und **24b** das kleinere Zahnrad **31** nicht mit dem größeren Zahnrad **32** in Eingriff Die Zwischenzahnräder **24a**, **24b** bzw. **25a**, **25b** bzw. **26a**, **26b** können beispielsweise jeweils 20 Zähne aufweisen, um raumsparend in die vorhandene erste Stufe **10** bzw. zweite Stufe **20** bzw. dritte Stufe **30** integriert werden zu können.

## Patentansprüche

1. Betätigungsvorrichtung für eine elektromechanisch betätigbare Fahrzeugbremse, umfassend
- eine mehrstufige Getriebeeinheit (**10**, **20**, **30**), die zwischen einem antreibenden Elektromotor (**40**) und einem getriebenen Antriebselement (**50**) der Fahrzeugbremse angeordnet ist, wobei
- wenigstens eine Stufe (**10**, **20**, **30**) der Getriebeeinheit als Stirnradgetriebe ausgebildet ist, und wenigstens zwei Stufen (**10**, **20**, **30**) der Getriebeeinheit mittels eines Doppelzahnrades (**12/21**; **22*/31***) gekoppelt sind, dessen Drehachse (**B**) sich parallel zur Drehachse (**A**) des Elektromotors (**40**) erstreckt, und wobei
- die Getriebeeinheit wenigstens eine Zwischenstufe (**24**; **25**; **26**) aufweist, die als Stirnradgetriebe ausgebildet ist, und in die wenigstens eine als Stirnradgetriebe ausgebildetete Stufe der Getriebeeinheit (**10**; **20**; **30**) integriert ist,
**dadurch gekennzeichnet, dass**
- die als Stirnradgetriebe ausgebildete Zwischenstufe (**24**; **25**; **26**) zwei Zwischenzahnräder (**24a**, **24b**; **25a**, **25b**; **26a**, **26b**) aufweist,
- die Drehachsen (**D**, **E**; **F**, **G**) der Zwischenzahnräder (**24a**, **24b**; **25a**, **25b**; **26a**, **26b**) sich parallel zur Drehachse (**A**) des Elektromotors (**40**) erstrecken, wobei
- die von den Drehachsen (**D**, **E**; **F**, **G**) der Zwischenzahnräder (**24a**, **24b**; **25a**, **25b**; **26a**, **26b**) gebildete Ebene (**D-E**; **F-G**) sich senkrecht zu der von der Drehachse (**A**) des Elektromotors (**40**) und der Drehachse (**B**) des Doppelzahnrades (**12/21**; **22*/31***) gebildeten Ebene (**A-B-C**) erstreckt.

2. Betätigungsvorrichtung nach Anspruch 1, **dadurch gekennzeichnet, dass**
- die beiden Zwischenzahnräder (**24a**, **24b**; **25a**, **25b**; **26a**, **26b**) identisch dimensioniert sind.

3. Betätigungsvorrichtung nach Anspruch 1 oder 2, **dadurch gekennzeichnet, dass**
- die erste und die zweite Stufe (**10**, **20**) der Getriebeeinheit jeweils als Stirnradgetriebe ausgebildet sind, wobei
- die wenigstens eine Zwischenstufe (**24**; **25**; **26**) in die erste und/oder die zweite Stufe (**10**, **20**) der Getriebeeinheit integriert ist.

4. Betätigungsvorrichtung nach Anspruch 3, **dadurch gekennzeichnet, dass** die erste und die zweite Stufe (**10**, **20**) der Getriebeeinheit mittels des Doppelzahnrades (**12/21**) gekoppelt sind, dessen Drehachse (**B**) sich parallel zur Drehachse (**A**) des Elektromotors (**40**) erstreckt

5. Betätigungsvorrichtung nach Anspruch 3 oder 4, **dadurch gekennzeichnet, dass**
- die zweite Stufe (**20**) mittels eines Doppelzahnrades (**22/31**) mit einer dritten Stufe (**30**) gekoppelt ist, dessen Drehachse (**C**) sich parallel zur Drehachse (**A**) des Elektromotors (**40**) erstreckt.

6. Betätigungsvorrichtung nach Anspruch 5, **dadurch gekennzeichnet, dass**
- die dritte Stufe (**30**) als Planetenradgetriebe ausgebildet ist, oder dass
- die Drehachse (**C**) des Doppelzahnrades (**22/31**), das die zweite und dritte Stufe (**20**, **30**) koppelt, in der von der Drehachse (**A**) des Elektromotors (**40**) und der Drehachse (**B**) des Doppelzahnrades (**12/21**), das die erste und zweite Stufe (**10**, **20**) koppelt, gebildeten Ebene (**A-B-C**) liegt.

7. Betätigungsvorrichtung nach Anspruch 4 und 5, **dadurch gekennzeichnet, dass**
- die Schnittgerade, in der die von den Drehachsen (**D**, **E**; **F**, **G**) der Zwischenzahnräder (**24a**, **24b**; **25a**, **25b**; **26a**, **26b**) gebildete Ebene (**D-E**; **F-G**) die von den Drehachsen (**A**, **B**, **C**) des Elektromotors (**40**) und der Doppelzahnräder (**22/31**, **12/21**) gebildete Ebene (**A-B-C**) schneidet, zwischen der Drehachse (**A**) des Elektromotors (**40**) und der Drehachse (**C**) des Doppelzahnrades (**22/31**) verläuft, das die zweite und dritte Stufe (**20**, **30**) koppelt.

8. Betätigungsvorrichtung nach Anspruch 1 oder 2, **dadurch gekennzeichnet, dass**
- die erste und eine dritte Stufe (**10**, **30**) der Getriebeeinheit jeweils als Stirnradgetriebe ausgebildet sind, wobei
- die wenigstens eine Zwischenstufe (**24**; **25**; **26**) in die erste und/oder dritte Stufe (**10**, **30**) der Getriebeeinheit integriert ist, wobei vorzugsweise:
- die erste Stufe (**10**) mittels eines Doppelzahnrades (**12/21**) mit der zweiten Stufe (**20**) gekoppelt ist, und
- die zweite Stufe (**20**) als Planetenradgetriebe ausgebildet ist.

9. Betätigungsvorrichtung nach Anspruch 5 oder 6, **dadurch gekennzeichnet, dass**
- die zweite und die dritte Stufe (**20**, **30**) der Getriebeeinheit jeweils als Stirnradgetriebe ausgebildet sind, wobei
- die wenigstens eine Zwischenstufe (**24**; **25**; **26**) in die zweite und/oder dritte Stufe (**20**, **30**) der Getriebeeinheit integriert ist, wobei vorzugsweise:
- die zweite Stufe (**20**) mittels eines Doppelzahnrades (**22*/31***) mit der dritten Stufe (**30**) gekoppelt ist, und
- die erste Stufe (**10**) als Planetenradgetriebe ausgebildet ist.

10. Betätigungsvorrichtung nach Anspruch 8 oder 9, **dadurch gekennzeichnet, dass**
- die Drehachse (**C**) eines durchmessergrößten Zahnrades (**32**) der dritten Stufe (**30**) in der von der Drehachse (**A**) des Elektromotors (**40**) und der Drehachse (**B**) des Doppelzahnrades (**12/21**; **22*/31***) gebildeten Ebene (**A-B-C**) liegt, und/oder dass
- die Schnittgerade, in der die von den Drehachsen (**D**, **E**; **F**, **G**) der Zwischenzahnräder (**24a**, **24b**; **25a**, **25b**; **26a**, **26b**) gebildete Ebene (**D-E**; **F-G**) die von den Drehachsen (**A**, **B**, **C**) des Elektromotors (**40**) sowie des Doppelzahnrades (**22*/31***, **12/21**) gebildete Ebene (**A-B-C**) schneidet, zwischen der Drehachse (**A**) des Elektromotors (**40**) und der Drehachse (**C**) eines durchmessergrößten Zahnrades (**32**) der dritten Stufe (**30**) verläuft.

11. Betätigungsvorrichtung nach einem der Ansprüche 1 bis 10, **dadurch gekennzeichnet, dass**
- die erste Stufe (**10**) der Getriebeeinheit eingangsseitig von dem Elektromotor (**40**) angetrieben wird.

12. Betätigungsvorrichtung nach einem der Ansprüche 5 und 6 oder 8 bis 11, **dadurch gekennzeichnet, dass**
- von der dritten Stufe (**30**) der Getriebeeinheit ausgangsseitig das Antriebselement (**50**) der Fahrzeugbremse getrieben wird, und/oder dass
- die zweite Stufe (**20**) der Getriebeeinheit der ersten Stufe (**10**) der Getriebeeinheit nachgeschaltet und/oder der dritten Stufe (**30**) der Getriebeeinheit vorgeschaltet ist.

13. Betätigungsvorrichtung nach einem der Ansprüche 1 bis 12, **dadurch gekennzeichnet, dass**
- wenigstens eine Stufe der Getriebeeinheit, in die keine Zwischenstufe integriert ist, als Riemengetriebe oder Reibradgetriebe ausgebildet ist.

14. Elektromechanisch betätigbare Fahrzeugbremse, umfassend
- eine Betätigungsvorrichtung nach einem der Ansprüche 1 bis 13, und
- ein Antriebselement (**50**), das die von der Getriebeeinheit der Betätigungsvorrichtung ausgangsseitig erzeugte Drehbewegung in eine Längsbewegung zum Betätigen der Fahrzeugbremse umwandelt.

## Claims

1. An actuating device for an electromechanically actuatable vehicle brake, comprising
- a multi-stage transmission unit (**10**, **20**, **30**), which is arranged between a driving electric motor (**40**) and a driven drive element (**50**) of the vehicle brake, wherein
- at least one stage (**10**, **20**, **30**) of the transmission unit is embodied as a spur-gear transmission, and at least two stages (**10**, **20**, **30**) of the transmission unit are coupled by means of a double gearwheel (**12/21**; **22*/31***), the rotational axis (**B**) of which extends parallel to the rotational axis (**A**) of the electric motor (**40**), and wherein
- the transmission unit has at least one intermediate stage (**24**; **25**; **26**) which is embodied as a spur-gear transmission and into which at least one stage, embodied as a spur-gear transmission, of the transmission unit (**10**; **20**; **30**) is integrated,
**characterized in that**
- the intermediate stage (**24**; **25**; **26**) which is embodied as a spur-gear transmission has two intermediate gearwheels (**24a**, **24b**; **25a**, **25b**; **26a**, **26b**),
- the rotational axes (**D**, **E**; **F**, **G**) of the intermediate gearwheels (**24a**, **24b**; **25a**, **25b**; **26a**, **26b**) extend parallel to the rotational axis (**A**) of the electric motor (**40**), wherein
- the plane (**D-E**; **F-G**) formed by the rotational axes (**D**, **E**; **F**, **G**) of the intermediate gearwheels (**24a**, **24b**; **25a**, **25b**; **26a**, **26b**) extends perpendicularly with respect to the plane (**A-B-C**) formed by the rotational axis (**A**) of the electric motor (**40**) and the rotational axis (**B**) of the double gearwheel (**12/21**; **22*/31***).

2. The actuating device as claimed in claim 1, **characterized in that**
- the two intermediate gearwheels (**24a**, **24b**; **25a**, **25b**; **26a**, **26b**) are dimensioned identically.

3. The actuating device as claimed in claim 1 or 2, **characterized in that**
- the first and the second stages (**10**, **20**) of the transmission unit are each embodied as spur-gear transmissions, wherein
- the at least one intermediate stage (**24**; **25**; **26**) is integrated into the first and/or the second stage (**10**, **20**) of the transmission unit.

4. The actuating device as claimed in claim 3, **characterized in that** the first and second stages (**10**, **20**) of the transmission unit are coupled by means of the double gearwheel (**12/21**), the rotational axis (**B**) of which extends parallel to the rotational axis (**A**) of the electric motor (**40**).

5. The actuating device as claimed in claim 3 or 4, **characterized in that**
- the second stage (**20**) is coupled to a third stage (**30**) by means of a double gearwheel (**22/31**), the rotational axis (**C**) of which extends parallel to the rotational axis (**A**) of the electric motor (**40**).

6. The actuating device as claimed in claim 5, **characterized in that**
- the third stage (**30**) is embodied as a planetary transmission, or **in that**
- the rotational axis (**C**) of the double gearwheel (**22/31**) which couples the second and third stages (**20**, **30**) lies in the plane (**A-B-C**) formed by the rotational axis (**A**) of the electric motor (**40**) and the rotational axis (**B**) of the double gearwheel (**12/21**) which couples the first and second stages (**10**, **20**).

7. The actuating device as claimed in claims 4 and 5, **characterized in that**
- the sectional line at which the plane (**D-E**; **F-G**) formed by the rotational axes (**D**, **E**; **F**, **G**) of the intermediate gearwheels (**24a**, **24b**; **25a**, **25b**; **26a**, **26b**) intersects the plane (**A-B-C**) formed by the rotational axes (**A**, **B**, **C**) of the electric motor (**40**) and the double gearwheels (**22/31**, **12/21**) runs between the rotational axis (**A**) of the electric motor (**40**) and the rotational axis (**C**) of the double gearwheel (**22/31**) which couples the second and third stages (**20**, **30**).

8. The actuating device as claimed in claim 1 or 2, **characterized in that**
- the first and a third stage (**10**, **30**) of the transmission unit are each embodied as a spur-gear transmission, wherein
- the at least one intermediate stage (**24**; **25**; **26**) is integrated into the first and/or third stage (**10**, **30**) of the transmission unit, wherein in particular:
- the first stage (**10**) is coupled to the second stage (**20**) by means of a double gearwheel (**12/21**), and
- the second stage (**20**) is embodied as a planetary transmission.

9. The actuating device as claimed in claim 5 or 6, **characterized in that**
- the second and third stages (**20**, **30**) of the transmission unit are each embodied as a spur-gear transmission, wherein
- the at least one intermediate stage (**24**; **25**; **26**) is integrated into the second and/or third stages (**20**, **30**) of the transmission unit, wherein in particular:
- the second stage (**20**) is coupled to the third stage (**30**) by means of a double gearwheel (**22*/31***), and
- the first stage (**10**) is embodied as a planetary transmission.

10. The actuating device as claimed in claim 8 or 9, **characterized in that**
- the rotational axis (**C**) of a gearwheel (**32**) which has the largest diameter in the third stage (**30**) lies in the plane (**A-B-C**) formed by the rotational axis (**A**) of the electric motor (**40**) and the rotational axis (**B**) of the double gearwheel (**12/21**; **22*/31***), and/or **in that**
- the sectional line at which the plane (**D-E**; **F-G**) formed by the rotational axes (**D**, **E**; **F**, **G**) of the intermediate gearwheels (**24a**, **24b**; **25a**, **25b**; **26a**, **26b**) intersects the plane (**A-B-C**) formed by the rotational axes (**A**, **B**, **C**) of the electric motor (**40**) and of the double gearwheel (**22*/31***, **12/21**) runs between the rotational axis (**A**) of the electric motor (**40**) and the rotational axis (**C**) of a gearwheel (**32**) which has the largest diameter in the third stage (**30**).

11. The actuating device as claimed in one of claims 1 to 10, **characterized in that**
- the first stage (**10**) of the transmission unit is driven on the input side by the electric motor (**40**).

12. The actuating device as claimed in one of claims 5 and 6 or 8 to 11, **characterized in that**
- the drive element (**50**) of the vehicle brake is driven on the output side by the third stage (**30**) of the transmission unit, and/or **in that**
- the second stage (**20**) of the transmission unit is connected downstream of the first stage (**10**) of the transmission unit and/or connected upstream of the third stage (**30**) of the transmission unit.

13. The actuating device as claimed in one of claims 1 to 12, **characterized in that**
- at least one stage of the transmission unit into which no intermediate stage is integrated is embodied as a belt drive or friction gear.

14. An electromechanically actuatable vehicle brake, comprising
- an actuating device as claimed in one of claims 1 to 13, and
- a drive element (**50**) which converts the rotational movement generated on the output side by the transmission unit of the actuating device into a longitudinal movement in order to actuate the vehicle brake.

## Revendications

1. Dispositif d'actionnement pour un frein de véhicule à actionnement électromécanique, comprenant
- une unité de transmission à plusieurs étages (10, 20, 30) qui est disposée entre un moteur électrique menant (40) et un élément d'entraînement mené (50) du frein de véhicule, dans lequel
- au moins un étage (10, 20, 30) de l'unité de transmission est réalisé sous la forme d'un engrenage droit, et au moins deux étages (10, 20, 30) de l'unité de transmission sont couplés au moyen d'une double roue dentée (12/21 ; 22*/31*) dont l'axe de rotation (B) s'étend parallèlement à l'axe de rotation (A) du moteur électrique (40), et dans lequel
- l'unité de transmission présente au moins un étage intermédiaire (24 ; 25 ; 26) qui est réalisé sous la forme d'un engrenage droit, et dans lequel au moins un étage de l'unité de transmission (10 ; 20 ; 30) réalisé sous la forme d'un engrenage droit est intégré,
**caractérisé en ce que**
- l'étage intermédiaire (24 ; 25 ; 26) réalisé sous la forme d'un engrenage droit présente deux roues dentées intermédiaires (24a, 24b ; 25a, 25b ; 26a, 26b),
- les axes de rotation (D, E ; F, G) des roues dentées intermédiaires (24a, 24b ; 25a, 25b ; 26a, 26b) s'étendent parallèlement à l'axe de rotation (A) du moteur électrique (40), dans lequel
- le plan (D-E ; F-G) formé par les axes de rotation (D, E ; F, G) des roues dentées intermédiaires (24a, 24b ; 25a, 25b ; 26a, 26b) s'étend perpendiculairement au plan (A-B-C) formé par l'axe de rotation (A) du moteur électrique (40) et l'axe de rotation (B) de la double roue dentée (12/21 ; 22*/31*).

2. Dispositif d'actionnement selon la revendication 1, **caractérisé en ce que**
- les deux roues dentées intermédiaires (24a, 24b ; 25a, 25b ; 26a, 26b) ont des dimensions identiques.

3. Dispositif d'actionnement selon la revendication 1 ou 2, **caractérisé en ce que**
- le premier et le deuxième étage (10, 20) de l'unité de transmission sont réalisés chacun sous la forme d'un engrenage droit, dans lequel
- ledit au moins un étage intermédiaire (24 ; 25 ; 26) est intégré dans le premier et/ou le deuxième étage (10, 20) de l'unité de transmission.

4. Dispositif d'actionnement selon la revendication 3, **caractérisé en ce que** le premier et le deuxième étage (10, 20) de l'unité de transmission sont couplés au moyen de la double roue dentée (12/21) dont l'axe de rotation (B) s'étend parallèlement à l'axe de rotation (A) du moteur électrique (40).

5. Dispositif d'actionnement selon la revendication 3 ou 4, **caractérisé en ce que**
- le deuxième étage (20) est couplé au moyen d'une double roue dentée (22/31) à un troisième étage (30) dont l'axe de rotation (C) s'étend parallèlement à l'axe de rotation (A) du moteur électrique (40).

6. Dispositif d'actionnement selon la revendication 5, **caractérisé en ce que**
- le troisième étage (30) est réalisé sous la forme d'un engrenage planétaire, ou **en ce que**
- l'axe de rotation (C) de la double roue dentée (22/31) qui couple les deuxième et troisième étages (20, 30) est situé dans le plan (A-B-C) formé par l'axe de rotation (A) du moteur électrique (40) et l'axe de rotation (B) de la double roue dentée (12/21) qui couple les premier et deuxième étages (10, 20).

7. Dispositif d'actionnement selon les revendications 4 et 5, **caractérisé en ce que**
- la droite d'intersection, par laquelle le plan (D-E ; F-G) formé par les axes de rotation (D, E ; F, G) des roues dentées intermédiaires (24a, 24b ; 25a, 25b ; 26a, 26b) coupe le plan (A-B-C) formé par les axes de rotation (A, B, C) du moteur électrique (40) et des doubles roues dentées (22/31, 12/21), s'étend entre l'axe de rotation (A) du moteur électrique (40) et l'axe de rotation (C) de la double roue dentée (22/31) qui couple les deuxième et troisième étages (20, 30).

8. Dispositif d'actionnement selon la revendication 1 ou 2, **caractérisé en ce que**
- le premier et le troisième étage (10, 30) de l'unité de transmission sont réalisés chacun sous la forme d'un engrenage droit, dans lequel
- ledit au moins un étage intermédiaire (24 ; 25 ; 26) est intégré dans le premier et/ou le troisième étage (10, 30) de l'unité de transmission, dans lequel de préférence :
- le premier étage (10) est couplé au deuxième étage (20) au moyen d'une double roue dentée (12/21), et
- le deuxième étage (20) est réalisé sous la forme d'un engrenage planétaire.

9. Dispositif d'actionnement selon la revendication 5 ou 6, **caractérisé en ce que**
- le deuxième et le troisième étage (20, 30) de l'unité de transmission sont réalisés chacun sous la forme d'un engrenage droit, dans lequel
- ledit au moins un étage intermédiaire (24 ; 25 ; 26) est intégré dans le deuxième et/ou le troisième étage (20, 30) de l'unité de transmission, dans lequel de préférence :
- le deuxième étage (20) est couplé au troisième étage (30) au moyen d'une double roue dentée (22*/31*), et
- le premier étage (10) est réalisé sous la forme d'un engrenage planétaire.

10. Dispositif d'actionnement selon la revendication 8 ou 9, **caractérisé en ce que**
- l'axe de rotation (C) d'une roue dentée (32) du troisième étage (30) ayant le plus grand diamètre est situé dans le plan (A-B-C) formé par l'axe de rotation (A) du moteur électrique (40) et l'axe de rotation (B) de la double roue dentée (12/21 ; 22*/31*), et/ou **en ce que**
- la droite d'intersection, par laquelle le plan (D-E ; F-G) formé par les axes de rotation (D, E ; F, G) des roues dentées intermédiaires (24a, 24b ; 25a, 25b ; 26a, 26b) coupe le plan (A-B-C) formé par les axes de rotation (A, B, C) du moteur électrique (40) et de la double roue dentée (22*/31*, 12/21), s'étend entre l'axe de rotation (A) du moteur électrique (40) et l'axe de rotation (C) d'une roue dentée (32) du troisième étage (30) ayant le plus grand diamètre.

11. Dispositif d'actionnement selon l'une des revendications 1 à 10, **caractérisé en ce que**
- le premier étage (10) de l'unité de transmission est entraîné côté entrée par le moteur électrique (40).

12. Dispositif d'actionnement selon l'une des revendications 5 et 6 ou 8 à 11, **caractérisé en ce que**
- l'élément d'entraînement (50) du frein de véhicule est mené côté sortie par le troisième étage (30) de l'unité de transmission, et/ou **en ce que**
- le deuxième étage (20) de l'unité de transmission est situé en aval du premier étage (10) de l'unité de transmission et/ou en amont du troisième étage (30) de l'unité de transmission.

13. Dispositif d'actionnement selon l'une des revendications 1 à 12, **caractérisé en ce que**
- au moins un étage de l'unité de transmission, dans lequel aucun étage intermédiaire n'est intégré, est réalisé sous la forme d'une transmission par courroie ou d'une transmission par roue de friction.

14. Frein de véhicule à actionnement électromécanique, comprenant
- un dispositif d'actionnement selon l'une des revendications 1 à 13 et
- un élément d'entraînement (50) qui convertit le mouvement de rotation produit côté sortie par l'unité de transmission du dispositif d'actionnement en un mouvement longitudinal pour actionner le frein de véhicule.
